# EUROPEAN PATENT SPECIFICATION

(11) **EP 1 716 444 B1**
(45) Date of publication and mention of the grant of the patent: **17.12.2008**
(21) Application number: 05702809.4
(22) Date of filing: 27.01.2005
(51) Int. Cl.: G02B 21/00, G01N 21/64

(54) **FLUORESCENCE MICROSCOPE ARRANGEMENT**
FLUORESZENZ-MIKROSKOP-ANORDNUNG
AGENCEMENT DE MICROSCOPE A FLUORESCENCE

(30) Priority: 09.02.2004 EP 04100462
(43) Date of publication of application: 02.11.2006
(73) Proprietor: Philips Intellectual Property & Standards GmbH, 20099 Hamburg (DE); Koninklijke Philips Electronics N.V., 5621 BA Eindhoven (NL)
(72) Inventor: GLEICH, Bernhard, Philips I.P. & S., 52066 Aachen (DE)
(74) Representative: Damen, Daniel Martijn
(86) International application number: PCT/IB2005/050354
(87) International publication number: WO 2005/076050

(56) References cited:
- WO-A-02/059582
- US-A- 5 807 677
- US-A1- 2003 085 703
- PETROC, N.K. ET AL.: "Polar Molecular Clusters Produced upon Photoinduced Electron Transfer in an Intermoecular Exciplex in Binary Solvents" JOURNAL OF PHYSICAL CHEMESTRY, vol. 96, no. 7, 1992, pages 2901-2903, XP002326246 cited in the application

## Description

The invention relates to a microscope arrangement having a fluorescence microscope for imaging the distribution of a fluorescent marker in sample. The invention relates furthermore to a method for determining the spatial distribution of a fluorescent marker in a sample.

In fluorescence microscopy, the distribution of a fluorescent marker in a sample is observed with a microscope designed for that purpose. A fluorescent marker is a chemical substance, which, after being excited by suitable primary radiation, emits fluorescent light of a characteristic spectral range, which is why the term "fluorescent dye" is often used for it. By coupling a fluorescent marker to other molecules, such as medicaments or proteins, information can be obtained, for example, about metabolic processes in biological systems. But the resolution that can be achieved with current fluorescence microscopes is limited to a range of about 100 nm to 30nm, so that the study of relatively small structures or of processes on a molecular level is not possible.

US 5,807,677 describes a FCS apparatus comprising a laser, which illuminates a small probe volume, via a beam splitter and a confocal imaging optical system. This probe volume is imaged via the confocal optical system on a photodetector, and this is coupled to an electronic evaluation system for FCS analysis. In order to convey a target sequences which have been hybridized with primers into the probe volume faster than if controlled by diffusion, US 5,807,677 describes an electric molecule trap, which consists of an annular electrode and a Neher capillary whose extended tip lies in the centre of the annular electrode. If an electric voltage is applied between the annular electrode and Neher capillary, the target sequences drift into the probe volume. If the primers and target sequences display different charges one simultaneously achieves an electrophoretic separation.

Against this background, it was an object of the present invention to provide means for improving the resolution in fluorescence microscopy in clear and turbid media.

That object is achieved by a microscope arrangement having the features of claim 1 and by a method having the features of claim 4. Advantageous embodiments are contained in the subsidiary claims.

The microscope arrangement according to the invention is used for imaging a sample (for example, a biological sample) that contains a fluorescent marker. Here, the fluorescent marker shall be one that is magnetically and/or electrically sensitive, that is, with which the fluorescence behavior (fluorescence intensity, spectral shifts of fluorescence, polarization, variation in time of the intensity etc.) of the marker is influenced by an external magnetic or electric field.

The microscope arrangement contains the following components:
- A fluorescence microscope for exciting and imaging fluorescence radiation from the sample. Suitable microscopes for this purpose are known from the field of fluorescence microscopy.
- A field generator for generating a spatially inhomogeneous magnetic and/or a spatially inhomogeneous electric field in the sample, wherein the inhomogeneity of the field must be present at least in a local region.

Using the described microscope arrangement, it is possible to extract more information from the study of a sample than with conventional fluorescence microscopy.

This is attributable to the fact that it is possible to generate in the sample a spatially inhomogeneous field that, in accordance with requirements, influences the emission behavior of the fluorescent marker to be observed. The field therefore gives the user the opportunity to vary the local conditions within the sample specifically and consequently to influence the fluorescence. In particular, in this way the resolution of the microscope arrangement in respect of the fluorescence radiation can be improved, specific applications of the arrangement being described in more detail below. Furthermore, using the microscope arrangement it is possible also to carry out analyses in turbid media with improved resolution.

According to a first, preferred embodiment, the microscope arrangement is designed to modify in a defined manner the inhomogeneous magnetic and/or electric field within the sample, for example, to shift its position and/or to change its distribution. By observing how a given sample volume responds to the change in the field, important information can be obtained about the fluorescent marker contained therein. If, for example, the field has a small focal region with special conditions (e. g. a minimum of field strength), then, with this, selectively at different points within the sample the presence of the fluorescent marker can be analyzed.

There are various possibilities for constructing a field generator having the desired properties. In this regard to some extent one can have recourse to solutions that are known for other applications, such as, for example, the imaging of magnetic particles(cf. DE101 51 778 A1). According to a preferred embodiment, the field generator comprises a first pole body of a first polarity (in the case of magnetic fields, for example "North", in the case of electric fields, for example, "negative"), which on at least two opposite sides is adjacent to second pole bodies of the other polarity ("South" respectively "positive"). The first pole body preferably has a tip. As will be explained in detail within the scope of the description of the drawings, in the case of such a configuration there is generally a point-form region in the vicinity of the field generator at which the field strength assumes a minimum. This is then suitable as a focal region when observing a sample.

The changes in fluorescence behavior in the sample caused by the magnetic or electric field can in the simplest case be observed by the user of the microscope arrangement purely by eye. Preferably, however, an advanced image processing of the image recorded with the fluorescence microscope takes place by means of a data processing device. In this regard, the data processing device is designed to reconstruct the distribution of the fluorescent marker in the sample from the known strength distribution of the (spatially and optionally also temporally) inhomogeneous field during one or more recordings and from the measured fluorescence radiation. If, for example, the field has a focal region of minimal field strength, the data processing device is able to take into account the fact that the fluorescence in this region is correspondingly changed (increased or reduced).

The invention furthermore relates to a method for determining the spatial distribution of a magnetically and/or electrically sensitive fluorescent marker in a sample, which method comprises the following steps:
- Generation of a temporally static or varying, inhomogeneous, magnetic and/or inhomogeneous electric field in the sample, so that the fluorescent marker comes across locally different conditions.
- Excitation of fluorescence radiation in the sample, for example by primary radiation of suitable quantum energy.
- Generation of at least one optical image of the fluorescence radiation coming from the sample.
- Calculation of the spatial distribution of the fluorescent marker by means of the at least one above-mentioned image and by means of the known associated strength distribution of the inhomogeneous field. Preferably, the calculation is based on at least two images in the case of spatially different field-strength distributions. If the field-strength distributions are such that they each allow analysis of a point-form region or pixel/voxel, normally N different field-strength distributions are required for the representation of N pixels/voxels.

The method concerns in a general way the steps that can be performed with a microscope arrangement of the kind described above. With regard to details, advantages and further aspects of the method, reference is made in particular to the above description. The method enables information to be extracted from the sample with high local resolution, by locally varying the conditions of the fluorescence within the sample by means of a spatially inhomogeneous field and the use of a fluorescent marker sensitive thereto.

If an inhomogeneous magnetic field is used in the method, it preferably has (at one point at least) a gradient of at least 10² T/m, especially preferably of at least 10³ T/m, and very especially preferably of at least 10⁶ T/m. At such values of the gradient, the magnetic field strength per nanometer varies by about 0.1 to 1 mT, wherein known magnetically sensitive fluorescent markers already respond to such changes. At said gradients, a spatial resolution in the region of 1 nm can be achieved.

If an inhomogeneous electric field is used in the method, this preferably has (at one point at least) a gradient of at least 10¹¹ V/m², especially preferably of at least 10¹⁵ V/m². At these values and with the use of ordinary electrically sensitive fluorescent markers, a resolution in the nanometer range is likewise obtained.

According to a preferred embodiment of the method, the inhomogeneous field is configured so that it has a local minimum of the field strength. In particular, this minimum can have the value zero, that is, can correspond to a field-free region. Preferably, the width of the local minimum is smaller than the optical resolution of the fluorescence microscope. Here, the "width" of the minimum is expediently defined in dependence on the effect of the field on the fluorescent marker under consideration. If the latter, for example, in the case of a vanishing field has a minimal fluorescence yield that increases to a maximum value as the field increases, the "width" can be defined as the region having a fluorescence yield below a specific percentage (for example, 50%) of the maximum value. In the spatially confined region of the local minimum, special conditions are therefore created for the fluorescence, which lead to observable effects in the fluorescence radiation emitted from the sample. The minimum can therefore be used as the focal region for targeted analysis of small volumes within the sample.

According to another aspect of the method, the sample is located during its analysis in a solution that contains the fluorescent marker. In this way, fluorescent marker that has been lost and/or degraded, for example, by bleaching, is constantly replaced from the solution, so that the fluorescence in the sample can be maintained for a comparatively long period.

These and other aspects of the invention are apparent from and will be elucidated with reference to the embodiments described hereinafter.

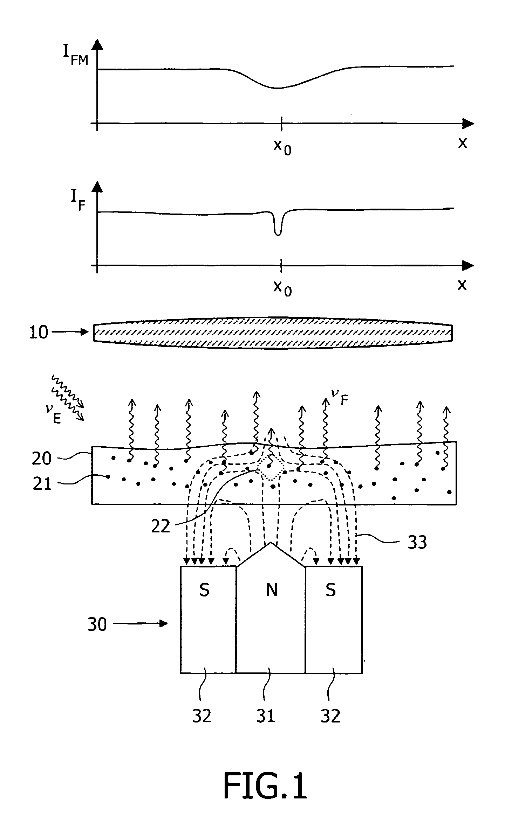

In the drawings, the single Figure shows schematically the principle of the microscope arrangement according to the invention and its use.

Within the field of fluorescence microscopy, the point is to determine the distribution of a fluorescent marker 21 within a sample 20; this distribution, for example, in the case of biological samples, can provide information about anatomical and/or metabolic conditions. Suitable fluorescence microscopes are found, for example, in the LSM 510 series of the firm Carl Zeiss in Oberkochen. To excite the fluorescence, the sample 20 is irradiated with (primary) photons ν_{E}, which are absorbed by the atoms and molecules of the fluorescent marker 21 and thus send them into an excited energy state. This energy state is then degraded again through emission of the fluorescence photons ν_{F}, which have a wavelength characteristic of the marker.

From the fluorescence photons ν_{F} entering an associated microscope 10, an image of the intensity distribution of the fluorescence radiation is created by the optical system of the microscope. On this image, an observer can detect by eye, for example, areas of increased concentration of the fluorescent marker. Moreover, in the case of advanced evaluation methods as a rule the intensity distribution of the fluorescence radiation is measured quantitatively. Common to all known fluorescence microscopes operating according to the principle described so far is the fact that the optical resolution is limited to values of about 100 to 30 nm.

To overcome this limitation, with the arrangement illustrated in the Figure it is proposed to use a magnetically sensitive fluorescent marker 21 as well as a spatially inhomogeneous magnetic field 33 within the sample 20. Magnetically sensitive fluorescent markers alter their fluorescence behavior in dependence on the strength of the external magnetic field in which they are located. Typical examples of such fluorescent markers are the so-called "exciplexes", which are formed from excited complexes. That is to say, a molecule crosses through a primary photon into an excited state and combines with another molecule to form a dimer. In the dimer, the energy levels of the singulet and triplet states are virtually degenerate and shuffle in the course of time. If an external magnetic field is used, the triplet state splits into three different states, whereby the speed of mixing of singulet and triplet states is changed. The exciplex can cross into the ground state while emitting a fluorescence photon, the probability that this photon will be emitted being dependent on whether a singulet or triplet state was present. In this way, the fluorescence yield also depends on the external magnetic field. Changing of the fluorescence by the magnetic field can here amount to more than 30%, and effects can be achieved already with fields of less than 2 mT. Ideally, the two reaction partners of the exciplex are chemically bonded with one another to form a so-called intramolecular exciplex. Examples of magnetically sensitive fluorescent markers are known also from studies relating to MARY (**MA**gnetic field effect on **R**eaction **Y**ield) spectroscopy, cf. Günter Grampp et al.: RIEKEN Review No. 44 (February 2002)). Further, one can refer in this regard to the publications of N.Kh. Petrov (e.g.: N.Kh. Petrov, V.N. Borisenko, A.V. Starostin, M.V. Alfimov, Amplification of the cage effect in binary solvents detected by technique of magnetic modulation of exciplex fluorescence, Izv. AN SSSR, ser. chim., 1991, no. 11, p. 2456;

N.Kh. Petrov, V.N. Borisenko, A.V. Starostin, M.V. Alfimov, Polar molecular clusters produced upon photoinduced electron transfer in an intermolecular exciplex in binary solvents, J. Phys. Chem., 1992, vol. 96, no. 7, p.2901;

N.Kh. Petrov, V.N. Borisenko, M.V. Alfimov, Study of preferential solvation in binary solvent mixtures by the fluorescence-detected magnetic field effect. J. Chem. Soc., Faraday Trans., 1994, vol. 90, no. 1, 109-111; N.Kh. Petrov, V.N. Borisenko, M.V. Alfimov, Magnetic Field Effects of Exciplex Fluorescence of the Pyrene-Azacrown Ether System in the Presence of Alkali and Alkaline Earth Salts, J. Chem. Soc. Mendeleev Commun. 1995; N.Kh. Petrov, V.N. Borisenko, M.V. Alfimov, T. Fiebig, H. Staerk, Fluorescence-detected Magnetic Field Effects in Exciplex Systems Containing Azacrown Ethers as Electron Donor, J. Phys. chem., 1996, vol. 100, no. 16, 6368-6370.

Alternatively, instead of magnetically sensitive fluorescent markers, electrically sensitive fluorescent markers could be used. These are correspondingly distinguished by the fact that their fluorescence behavior depends on the external electric field in which they are located. Demonstrable changes in the fluorescence behavior frequently occur already at differences in the electric field strength of the order of magnitude of 10⁶ V/m. Electrically sensitive fluorescent markers are also used for measuring naturally occurring electric field strengths (for example, within a cell membrane). For that purpose, electrically sensitive fluorescent markers are described, for example, in United States patent specification 2002/0155520 A9; the markers described therein can be used also in the present case and the document is fully incorporated by reference into the present application. Furthermore, as regards this subject matter reference can be made to Jian-young Wu et al., Histochemical Journal, 30 169-187 (1998) as representative of further publications. For the record, the method described below for magnetically sensitive fluorescent markers can be carried out analogously for electrically sensitive markers as well.

To be able to exploit the sensitivity of the fluorescent marker 21 to magnetic fields, a field generator 30 that is capable of generating an inhomogeneous magnetic field 33 within the sample 20 is positioned in the vicinity of the probe 20. In the example illustrated, the field generator 30 consists of three (for example, permanently magnetic) pole bodies. A first pole body 31 having the polarity "magnetic North" preferably has a tip in order to improve the optical accessibility to the sample. On opposite sides of the first pole body 31 there are two further pole bodies 32 having the polarity "magnetic South". These could alternatively annularly surround the first pole body 31. With this configuration, a focal region 22, in which the magnetic field strength is approximately zero, occurs in front of the tip of the first pole body 31, as indicated by dashed field lines 33. The distance of the tip from the focal region 22 depends on the desired gradient and for gradients of 10⁶ T/m is typically about 1 µm and, for gradients of 10³ T/m, in the millimeter range. The width of the focal region can be, for example, about 1 nm. Furthermore, the field generator 30 is dimensioned so that the gradient of the magnetic field 33 around the focal region 22 is more than 10⁶ T/m (in the case of an inhomogeneous electric field, the gradient should be more than 10 V/m²).

In the Figure, above the microscope arrangement the distribution of the intensity IF of the fluorescence radiation ν_{F} from the sample 20 over the location x is reproduced. It is assumed in the example here that the fluorescent marker 21 is approximately uniformly distributed in the sample 20, so that in principle all points emit fluorescence radiation with the same intensity. Excluded from this, however, is the small focal region 22 of the inhomogeneous magnetic field 33, in which the intensity is reduced. At the associated point x₀ the intensity distribution IF thus exhibits a minimum. But because of the limited optical resolution of the microscope 10, the minimum cannot be sharply reproduced directly. Rather, the course of the fluorescence intensity I_{FM} observed with the microscope arrangement has the course illustrated in the upper diagram of the Figure, in which the minimum is correspondingly broadened and flattened. This "blurred" reproduction of a focal region 22 can nevertheless be used to improve the resolution of the microscope arrangement, since the position of the inhomogeneous magnetic field 33 and hence of the focal region 22 within the sample can be varied. By simultaneously observing the changes in the measured intensity distribution I_{FM}, mathematical conclusions can be drawn about the conditions in the locally defined region 22. As a result, by moving the focal region 22, the concentration of the fluorescent marker can be scanned with a resolution in the nanometer range.

To optimize the reproduction quality achievable with the microscope arrangement, the proportion of background radiation should preferably be minimized and hence the signal-noise ratio maximized. One way to do this comprises exciting only a small sample region by primary radiation ν_{E}, and restricting the observation to a correspondingly small region. Ideally, a high-quality confocal scanning microscope is therefore used. Furthermore, techniques such as two-photon excitation and a stimulated emission are helpful. The signal-noise ratio can also be improved by integration over time and/or a high light level for the excitation. In this respect photobleaching of the fluorescent marker constrains this method. Like all the above-mentioned techniques, in general also the numerous other techniques known from fluorescence microscopy can be used in combination with the present method.

Moreover, it may be that the fluorescent marker 21 will degenerate over the course of time as result of chemical reaction of the excited states (for example with oxygen). In that case, the degenerate marker molecules are replaced preferably by way of diffusion. If, for example, the surface of a sample is to be observed, this can be immersed in a solution of the fluorescent marker. The molecules of the fluorescent marker then absorb at the surface of the sample, degenerate molecules being replaced from time to time by unconsumed molecules of the fluorescent marker from the solution.

The described microscope arrangement can be used in the imaging of solid bodies, similar to the way scanning currently occurs with electron microscopes. It is advantageous in the above-described magnetic field-based method that the sample does not need to be dried, and biological samples can even still be living. If an electric field is used, the sample should be electrically isolated. This can be achieved, for example, by placing it in oil or demineralized water or by freezing.

Moreover, the method can be used for detection of biological molecules. In that case, a sample of different molecules could be mixed with fluorescent markers (one or more colors), which bond specifically or non-specifically to the molecules to be identified. Identification of the molecules would then be effected by means of the observed spatial distribution of the fluorescent markers. In the case of a non-specific bond of the fluorescent marker to the molecules, large molecules could be identified, for example, by the fact that the fluorescent marker bonds to different points of the molecule and therefore renders the characteristic spatial form of the molecule recognizable. In the case of a specific bond of fluorescent markers, the method could, for example, allow rapid segmentation of a DNA sample; here, different colors could encode different nucleotides.

## Claims

1. A microscope arrangement for imaging a sample (20) that contains a magnetically and/or electrically sensitive fluorescent marker(21), comprising:
a fluorescence microscope (10) comprising means for exciting and imaging fluorescence radiation (ν_{F}) from the sample (20); and
a field generator (30) for generating an inhomogeneous magnetic and/or inhomogeneous electric field (33) in the sample (20), the field generator having a first pole body (31) of a first polarity (N), which on at least two opposite sides is adjacent to second pole bodies (32) of different polarity (S), the field (33) having a local minimum (22) of field strength forming a focal region for observing the sample; the microscope being arranged to observe fluorescence radiation from said focal region while applying the inhomogeneous magnetic and/or electric field in order to improve the resolution of the fluorescence microscope.

2. A microscope arrangement as claimed in claim 1, which is designed to alter the inhomogeneous field (33) within the sample (20) in a defined manner.

3. A microscope arrangement as claimed in claim 1, **characterized in that** it comprises a data processing device for image processing of the image (I_{FM}) recorded by the fluorescence microscope (10), the data processing device being designed to reconstruct the distribution of the fluorescent marker (21) in the sample (20) from the known spatial strength distribution of the inhomogeneous field (33) during one or preferably several recordings.

4. A method of determining the spatial distribution of a magnetically and/or electrically sensitive fluorescent marker(21) in a sample (20), which method comprises the following steps:
generation of an inhomogeneous magnetic and/or inhomogeneous electric field (33) in the sample (20), the field (33) having a local minimum (22) of field strength forming a focal region for observing the sample;
excitation of fluorescence radiation(ν_{F}) in the sample (20);
generation of an image (I_{FM}) of the fluorescence radiation (ν_{F}) coming from said focal region of the sample (20) by means of a fluorescence microscope (10);
calculation of the spatial distribution of the fluorescent marker (21) by means of the generated image (I_{FM}) and by means of the known strength distribution of the field (33).

5. A method as claimed in claim 4, **characterized in that** the inhomogeneous magnetic field (33) has a gradient of at least 10² T/m, preferably of at least 10⁶ T/m.

6. A method as claimed in claim 4, **characterized in that** the inhomogeneous electric field has a gradient of at least 10¹¹ V/m², preferably of at least 10¹⁵V/m².

7. A method as claimed in claim 4, **characterized in that** the inhomogeneous field (33) has a local minimum (22) of field strength in form of a field-free point or region.

8. A method as claimed in claim 7, **characterized in that** the width of the local minimum (22) is smaller than the optical resolution of the fluorescence microscope (10).

9. A method as claimed in claim 4, **characterized in that** the sample (20) is located in a solution with the fluorescent marker.

## Patentansprüche

1. Mikroskopiereinrichtung zur Abbildung einer Probe (20), die einen magnetisch und/oder elektrisch sensitiven Fluoreszenzmarker (21) enthält, umfassend:
ein Fluoreszenzmikroskop (10) mit Mitteln zum Anregen und Abbilden von Fluoreszenzstrahlung (v_{F}) aus der Probe (20); und
einen Feldgenerator (30) zur Erzeugung eines inhomogenen magnetischen und/oder inhomogenen elektrischen Feldes (33) in der Probe (20), wobei der Feldgenerator (30) einen ersten Polkörper (31) mit einer ersten Polarität (N) aufweist, welcher an mindestens zwei gegenüberliegenden Seiten zweiten Polkörpern (32) anderer Polarität (S) benachbart ist, wobei das Feld (33) ein lokales Minimum (22) der Feldstärke hat, das einen Brennbereich zur Beobachtung der Probe bildet, wobei das Mikroskop ausgebildet ist, Fluoreszenzstrahlung aus dem genannten Brennbereich zu beobachten, während das inhomogene magnetische und/oder elektrische Feld angelegt werden, um die Auflösung des Fluoreszenzmikroskops zu verbessern.

2. Mikroskopiereinrichtung nach Anspruch 1, welche dazu eingerichtet ist, das inhomogene Feld (33) innerhalb der Probe (20) in definierter Weise zu verändern.

3. Mikroskopiereinrichtung nach Anspruch 1, **dadurch gekennzeichnet, dass** sie eine Datenverarbeitungseinrichtung zur Bildverarbeitung der mit dem Fluoreszenzmikroskop (10) aufgenommenen Abbildung (I_{FM}) enthält, wobei die Datenverarbeitungseinrichtung dazu eingerichtet ist, aus dem bekannten räumlichen Verlauf des inhomogenen Feldes (33) während einer oder vorzugsweise mehrerer Aufnahmen die Verteilung des Fluoreszenzmarkers (21) in der Probe (20) zu rekonstruieren.

4. Verfahren zur Ermittlung der räumlichen Verteilung eines magnetisch und/oder elektrisch sensitiven Fluoreszenzmarkers (21) in einer Probe (20), welches Verfahren die folgenden Schritte umfasst:
Erzeugung eines inhomogenen magnetischen und/oder inhomogenen elektrischen Feldes (33) in der Probe (20), wobei das Feld (33) ein lokales Minimum (22) der Feldstärke hat, das einen Brennpunktbereich zur Beobachtung der Probe bildet;
Anregung von Fluoreszenzstrahlung (vₚ) in der Probe (20);
Erzeugung einer Abbildung (I_{FM}) der aus dem genannten Brennbereich der Probe (20) kommenden Fluoreszenzstrahlung (v_{F}) mit einem Fluoreszenzmikroskop (10);
Berechnung der räumlichen Verteilung des Fluoreszenzmarkers (21) mit Hilfe der erzeugten Abbildung (I_{FM}) und mit Hilfe des bekannten Verlaufs des Feldes (33).

5. Verfahren nach Anspruch 4, **dadurch gekennzeichnet, dass** das inhomogene magnetische Feld (33) einen Gradienten von mindestens 10² T/m, vorzugsweise mindestens 10⁶ T/m hat.

6. Verfahren nach Anspruch 4, **dadurch gekennzeichnet, dass** das inhomogene elektrische Feld einen Gradienten von mindestens 10¹¹ V/m², vorzugsweise mindestens 10¹⁵ V/m² hat.

7. Verfahren nach Anspruch 4, **dadurch gekennzeichnet, dass** das inhomogene Feld (33) ein lokales Minimum (22) der Feldstärke in Form eines feldfreien Punktes oder Bereichs aufweist.

8. Verfahren nach Anspruch 7, **dadurch gekennzeichnet, dass** die Breite des lokalen Minimums (22) kleiner als die optische Auflösung des Fluoreszenzmikroskops (10) ist.

9. Verfahren nach Anspruch 4, **dadurch gekennzeichnet, dass** sich die Probe (20) in einer Lösung mit dem Fluoreszenzmarker befindet.

## Revendications

1. Montage formant microscope pour représenter par imagerie un échantillon (20) contenant un marqueur fluorescent sensible sur le plan magnétique et/ou électrique (21), comprenant:
un microscope à fluorescence (10) comprenant des moyens pour exciter et représenter par imagerie un rayonnement de fluorescence (V_{F}) venant de l'échantillon (20) ; et
un générateur de champ (30) pour générer un champ magnétique non homogène et/ou un champ électrique non homogène (33) dans l'échantillon (20), le générateur de champ comportant un premier noyau polaire (31) d'une première polarité (N), qui sur deux côtés opposés au moins est adjacent à des deuxièmes noyaux polaires (32) de polarité différente (S), le champ (33) ayant un minimum local (22) d'intensité de champ formant une zone focale pour observer l'échantillon; le microscope étant à même d'observer le rayonnement de fluorescence venant de ladite zone focale tout en appliquant le champ magnétique et/ou électrique non homogène afin d'améliorer la résolution du microscope à fluorescence.

2. Montage formant microscope suivant la revendication 1, conçu pour modifier de manière définie le champ non homogène (33) à l'intérieur de l'échantillon (20).

3. Montage formant microscope suivant la revendication 1, **caractérisé en ce qu'**il comprend un dispositif de traitement de données pour traiter l'image (I_{FM}) enregistrée par le microscope à fluorescence (10), le dispositif de traitement de données étant conçu pour reconstruire la distribution du marqueur fluorescent (21) dans l'échantillon (20) à partir de la distribution d'intensité spatiale connue du champ non homogène (33) pendant un ou, de préférence, plusieurs enregistrements.

4. Procédé de détermination de la distribution spatiale d'un marqueur fluorescent sensible sur le plan magnétique et/ou électrique (21) dans un échantillon (20), lequel procédé comprend les étapes suivantes:
la génération d'un champ magnétique non homogène et/ou d'un champ électrique non homogène (33) dans l'échantillon (20), le champ (33) ayant un minimum local (22) d'intensité de champ formant une zone focale pour observer l'échantillon;
l'excitation du rayonnement de fluorescence (V_{F}) dans l'échantillon (20);
la génération d'une image (I_{FM}) du rayonnement de fluorescence (V_{F}) provenant de ladite zone focale de l'échantillon (20) au moyen d'un microscope à fluorescence (10) ; et
le calcul de la distribution spatiale du marqueur fluorescent (21) au moyen de l'image générée (I_{FM}) et au moyen de la distribution d'intensité connue du champ (33).

5. Procédé suivant la revendication 4, **caractérisé en ce que** le champ magnétique non homogène (33) présente un gradient d'au moins 10² T/m, de préférence d'au moins 10⁶ T/m.

6. Procédé suivant la revendication 4, **caractérisé en ce que** le champ électrique non homogène présente un gradient d'au moins 10¹¹ V/m², de préférence d'au moins 10¹⁵ V/m².

7. Procédé suivant la revendication 4, **caractérisé en ce que** le champ non homogène (33) a un minimum local (22) d'intensité de champ sous la forme d'un point ou d'une zone sans champ.

8. Procédé suivant la revendication 7, **caractérisé en ce que** la largeur du minimum local (22) est inférieure à la résolution optique du microscope à fluorescence (10).

9. Procédé suivant la revendication 4, **caractérisé en ce que** l'échantillon (20) se trouve dans une solution avec le marqueur fluorescent.
